# NEUE EUROPÄISCHE PATENTSCHRIFT

(11) **EP 0 162 393 B2**
(45) Veröffentlichungstag und Bekanntmachung des Hinweises auf die Entscheidung über den Einspruch: **20.04.1994**
(45) Hinweis auf die Patenterteilung: 21.09.1988
(21) Anmeldenummer: 85105822.2
(22) Anmeldetag: 11.05.1985
(51) Int. Cl.: F16D 23/04, F16D 69/04

(54) **Reibkupplungen oder -bremsen mit einem Reibkörper, bestehend aus Trägerblech und Streusinterreibbelag**
Friction clutch or brake having a friction element comprising a sheet metal support and a deposition of sintered friction material
Embrayage ou frein à friction avec un élément de friction composé d'un support en tôle et d'une déposition d'une garniture de friction en matériau fritté

(30) Priorität: 14.05.1984 DE 3417813
(43) Veröffentlichungstag der Anmeldung: 27.11.1985
(73) Patentinhaber: SINTERSTAHL Gesellschaft m.b.H., D-87629 Füssen (DE)
(72) Erfinder: Vojacek, Herbert, Dipl.-Ing., D-8000 München (DE); Pflaum, Hermann, Dipl.-Ing., D-8031 Maisach (DE)
(74) Vertreter: Lohnert, Wolfgang, Dr.

(56) Entgegenhaltungen:
- EP-A- 0 070 952
- DE-A- 2 055 345
- DE-A- 2 744 994
- DE-A- 3 033 139
- DE-A- 3 122 522
- DE-B- 1 251 104
- DE-U- 7 342 680
- FR-A- 1 460 313
- FR-A- 2 101 727
- FR-A- 2 276 504
- FR-A- 2 315 325
- FR-A- 2 323 063
- GB-A- 945 445
- GB-A- 1 325 304
- US-A- 2 395 189
- US-A- 3 710 071
- ANTRIEBSTECHNIK, Band 16, Nr. 12, Dezember 1977, Seiten 703-708, Mainz, DE; K. FEDERN: "Leistungsgrenzen der Reibpaarung Stahl/Sinterbronze ölgeschmierter Reibkupplungen"
- M. Drozda: "Eigenschaften und Anwendung von Sinterreibwerkstoffen", Fachzeitschrift "ANTRIEBSTECHNIK" 22 (1983), Nr. 6

## Beschreibung

Die Erfindung betrifft einen Synchronisierring und/oder Synchronisier-Gegenkonus der im Oberbegriff des Anspruchs 1 definierten Gattung.

Das große Gebiet der Reibkupplungen und -bremsen ist zu unterteilen nach Bauformen, Art der Reibpaarung und Schmierung sowie nach Art der Bedienung und Schaltkraft. Nach der Bauform der Reibflächen ist vor allem zwischen Backen-, Kegel- und Scheibenkupplungen zu unterscheiden. Nach der Art der Reibpaarung und Schmierung unterscheidet man zwischen trockenlaufenden und geschmierten Reibflächen, mit und ohne besonderen Reibbelag. Insbesondere bei den überwiegend durch Öl geschmierten Reibbelägen ist die Art der Bedienung und Schaltkraft von wesentlicher Bedeutung. Beim Schaltvorgang muß das Öl zwischen den Reibflächen herausgepreßt werden, um Reibschluß mit hohen Reibungszahlen zu erreichen. Stehen hierfür pneumatische oder hydraulische Kraftverstärker zur Verfügung, so lassen sich problemlos hohe Schaltkräfte erzeugen, welche das Öl zwischen den Reibflächenpaaren verdrängen. Anders bei handgeschalteten Reibkupplungen oder -bremsen, wie z. B. handgeschalteten, synchronisierten Getrieben in Kraftfahrzeugen, wo die Gefahr des Aufschwimmens der Reibflächen aufeinander oder eines zu langsamen Verdrängens des Öles zwischen den Reibflächen besteht. Dies hat unerwünscht lange Schaltzeiten und im Extremfall das Versagen der Synchronisationseinrichtung zur Folge.

Die Schalt- bzw. Bremseigenschaften von Reibkupplungen oder -bremsen werden insbesondere von der Reibungscharakteristik der Reibflächenpaarungen und von der Größe der tatsächlich wirksamen Reibfläche bestimmt. Die tatsächlich wirksame Reibfläche ist der Anteil der geometrischen Reibfläche, welche im Eingriff tatsächlich Reibschluß mit der Partnerfläche hat. Reibflächen besitzen eine mehr oder weniger starke Oberflächenausbildung, was eine Verminderung der tatsächlich wirksamen Reibfläche bedeutet. Geschmierte Reibflächen besitzen in der Praxis Drainagenuten und Rillen in den Reibflächen zur Abführung des Öles bei der Herstellung des Kraftschlusses zwischen den Flächen des Reibflächenpaares. Derartige Nuten sind zumindest bei handgeschalteten Reibkupplungen und -bremsen bis heute unverzichtbar und bedeuten eine Verringerung der tatsächlich wirksamen Reibfläche um 30 % bis 80 % der geometrischen Reibfläche. Insbesondere bei nicht ebenen Reibflächenpaaren kann durch herstellungsbedingte Toleranzen oder aufgrund von Verformungen unter dem Reibdruck die Oberflächenform der beiden Reibpartner voneinander abweichen, so daß auch aus diesem Grund die tatsächlich wirksame Reibfläche gegenüber der geometrischen Reibfläche oftmals wesentlich verringert wird.

Reibflächen unterliegen hohen Scher- und Temperaturbeanspruchungen und einem mit der Temperatur wachsenden Reibverschleiß. Um diesen gering zu halten, sollten die tatsächlich wirksamen und demzufolge die geometrischen Reibflächen möglichst groß sein. Die hohen Anforderungen an deren Verschleißfestigkeit bedingen Reibflächen aus hochwertigen, teuren Materialien. Aus Gründen der Material- und damit Kostenersparnis werden jedoch die Reibflächen so kleinflächig wie gerade vertretbar ausgelegt. Bei hochbeanspruchten Reibkupplungen und -bremsen findet man daher heute überwiegend Formteile aus Basismaterialien wie Stahl, Messing und verschiedenen Bronzen, auf welche gegebenenfalls spezifische Reibbeläge nach den unterschiedlichsten Verfahren aufgebracht werden.

Unter den geschmierten Reibkupplungen oder -bremsen mit nicht ebenen und/oder geometrisch nicht abwickelbaren Reibflächen haben die Synchronisierringe für Kfz-Getriebe besondere Bedeutung und werden daher in der Folge ausführlicher beschrieben.

So beschreibt die DE-A-3 122 522 eine Synchronisiereinrichtung für formschlüssige Schaltkupplungen, bei der der Synchronisierring und/oder der Gleichlaufring aus Metall gefertigt sind und der Reibbelag aus Keramikwerkstoff gefertigt ist, wobei der Keramikwerkstoff als tragendes Element form-, reib- und/oder stoffschlüssig mit dem Synchronisier- und/oder Gleichlaufring verbunden ist oder aber durch Sputtern aufgebracht ist. Der Reibbelag ist auf Oxid- und/oder Silizid- und/oder Borid- und/oder Karbid- und/oder Nitrid- und/oder Titanatbasis gefertigt.

Bei Synchronisierringen und Gleichlaufringen gemäß dieser Vorveröffentlichung treten eine Reihe der zuvor erörterten Schwierigkeiten unverändert auf. So sind die Werkstoffe für den Reibbelag gemäß DE-A-3 122 522 besonders teuer, vor allem dann, wenn sie als selbsttragende Formkörper ausgebildet sind. Gleichwohl kann auf die Einbringung von Drainagenuten nicht verzichtet werden. Die Folge ist eine Herabsetzung der tatsächlich wirksamen Reibfläche bzw. der Zwang zu noch größerer und damit teurerer Dimensionierung der geometrischen Reibfläche. Gleiches gilt für die gemäß dieser Vorveröffentlichung durch Sputtern aufgebrachte Reibbeläge, da praktisch nur die Kornspitzen des aufgesputterten Reibbelages reibschlüssig werden. Da in der Regel nur eine Fläche des Reibflächenpaares mit diesem vorbeschriebenen, stark abrasiv wirkenden Reibkörper belegt wird, bedeutet dies einen überdurchschnittlich starken Verschleiß der nicht belegten Gegenfläche. Weiterhin gibt diese Ausführung besondere Probleme hinsichtlich Belagaufheizung, Wärmeabfuhr und Haftung des Reibbelages auf dem Basiskörper.

Nach einer anderen bekannten Ausführung eines Synchronisierringes, DE-A-2 744 994, besteht dieser aus einem metallischen Grundkörper und aus einem darauf aufgeklebten Reibkörper. Der Reibkörper ist auf Papierbasis hergestellt. Er weist eine Reihe organischer, mit Kunstharz getränkter Reibmaterialien auf. Derartige Reibbeläge sind zwar relativ preisgünstig herstellbar, lassen aber angesichts ihrer geringen Festigkeit nur eine geringe Reibpressung zu, so daß relativ große geometrische Reibflächen in den Synchronisierringen zur Verfügung stehen müssen, was große und teure Ringausführungen bedeutet. Dies wiederum ist aufgrund des begrenzten, verfügbaren Bauraumes häufig nicht im erforderlichen Ausmaß möglich. Die Verdrängung des Ölfilmes bei der Herstellung des Kraftschlusses erfolgt von großen Reibflächen nur langsam, was eine lange Synchronisierdauer zur Folge hat. Weiterhin verändert sich die Reibcharakteristik durch Einlagerung von Kohlenstoff, der durch Kracken des Öles infolge hoher Reibtemperaturen anfällt, was zu einem Versagen der Synchronisationseinrichtung führt.

Die DE-U-7 342 680 beschreibt einen Synchronisierring aus Sinterstahl, auf den eine dünne Molybdänschicht im Bereich der Reibfläche aufgetragen ist. Molybdänspritzmaterial ist ein teurer Werkstoff. Es muß in der Regel auf dem Ring nachverdichtet und in der Regel durch Schleifen auf die geforderten, sehr eng tolerierten Oberflächenmaße bebracht werden. In einem weiteren Arbeitsprozeß müssen Drainagenuten eingebracht werden, so daß derartige Synchronisierringe sehr teuer sind. Die aufgetragene Schicht besitzt relativ große Oberflächenrauhigkeit, so daß die tatsächlich wirksame Reibfläche vergleichsweise klein ist. Insbesondere hierdurch kommt es in der Praxis lokal häufig zu starken Erhitzungen in der Reibfläche, was ein Fressen von Synchronisierring und Gleichlaufring und eine Ablösung der Molybdänschicht nach sich zieht. Auch dies hat erhebliche Funktionsstörungen der Kupplung zur Folge.

Diese Schwierigkeiten werden verständlicher, wenn man sich die etwa bei Synchronisierringen in der Praxis tatsächlich auftretenden Belastungen ansieht und diese Belastungswerte etwa mit denen vergleicht, welche nachfolgend für Lamellenkupplungen und -bremsen genannt wurden. Im Aufsatz "Verbesserte Werkstoffe für Synchronringe" K.H. Matucha et.al.; Automobiltechnische Zeitschrift 83, 5 (1981), S. 227 ff werden praxisorientierte Belastungsbedingungen für Verschleißmessungen an bekannten und verfügbaren Synchronisierringen für PKW genannt:
- für die spez. Anpressung 58,9 bzw. 42,1 MPa
- für die Bremsarbeit (entspricht dem Wärmestrom) 2,07 bzw. 1,43 J/mm²

Dem Durchschnittsfachmann ist darüberhinaus bekannt, daß im LKW-Getriebe bzw. bei unvorschriftsmäßigen Schaltvorgängen im PKW-Bereich Bremsarbeiten bis zu 5 J/mm² und mehr auftreten, so daß die Hersteller von Kfz-Getrieben im Prüfstandtest bis zu 10 J/mm² Bremsarbeit an einen Synchronisierring anlegen (siehe auch Versuche mit erfindungsgemäßen Reibkupplungen am Ende des Beschreibungsteiles).

Ein Vergleich dieser Werte für den Anpreßdruck und die spezifische Reibarbeit mit den nachfolgend genannten Werten, welche für Lamellenkupplungen mit dem Reibpaar Stahl-Sinterreibbelag als Grenzwerte galten, läßt erkennen, daß diese spezifischen Parameter für Synchronisierringe um ein Vielfaches höher, für LKW-Synchronisierringe um etwa eine Zehnerpotenz höher liegen.

Wie eingangs erwähnt, haben Lamellenkupplungen im Anwendungsfeld Reibkupplungen oder -bremsen mit ebenen, geschmierten und auch nicht geschmierten Reibflächen, besondere Bedeutung erlangt, insbesondere beidseitig mit Reibbelag versehene, als ganzes Lamellenpaket nebeneinander angeordneten Kupplungslamellen. Mit diesen Kupplungen lassen sich große Momente übertragen, ohne daß die Flächenpressung bzw. der spezifische Wärmestrom pro Kupplungsflächeneinheit zu groß wird. Unter den Lamellenkupplungen haben solche, bestehend aus einem Reibkörper mit Streusinter-Rreibbelag besondere technische Bedeutung erlangt.

Reibkörper mit Streusinter-Reibbelag werden als ebene, scheibenförmige Reibkörper bzw. Lamellen großtechnisch und damit preisgünstig hergestellt. Dazu wird ein aus verschiedenen Komponenten bestehendes Pulver genau dosiert auf ein ebenes Trägerblech aufgebracht, in einer Reihe von Verfahrensstufen gesintert, gepreßt und verdichtet, druckgesintert, gebürstet und in der Regel in einem abschließenden Verfahrensschritt exakt auf die gewünschte Belagdicke verdichtet. Bereits während des Herstellvorganges lassen sich erforderlichenfalls Nuten und Rillen in die Belagoberfläche einpressen, ohne daß Kerbwirkungen und die Gefahr von Rißbildungen auftreten, wie das bei nachträglicher Anbringung mittels spanabhebender Verfahren häufig beobachtet wird.

Neben den oben beschriebenen Reibkörpern mit Streusinter-Reibbelag sind eine Vielzahl anderer scheibenförmige Reibkörper bekannt. So beschreibt die DE-B-1 251 104 einen Reibkörper, der aus einem Unterlagsblech und zwei darüber angebrachten und aufgesinterten Schichten, einer Bodenschicht und einer Außenschicht, besteht. Wahlweise werden in dem Unterlagsblech vor der Beschichtung Vorsprünge durch Prägen erzeugt, welche sich anschließend beim Zusammenbringen von Reibkörper mit einer Trägerplatte in entsprechende Öffnungen der Trägerplatte erstrecken und somit als Verankerung gegen Verdrehen beider Teile zueinander dienen.

Das Verschleißverhalten von Lamellenkupplungen mit Streusinter-Reibbelag im oben genannten, bekannten Anwendungsbereich ist in der Literatur ausführlich beschrieben.

Im Aufsatz "Leistungsgrenzen der Reibpaarung Stahl/Sinterbronze ölgeschmierter Reibkupplungen" von Prof. Federn, in der Zeitschrift "Antriebstechnik", 16, 12 (1977), S. 703 ff, sind auf S. 703 für Lamellenkupplungen oder -bremsen "als Parameter, die auf die Leistungsgrenzen einen Einfluß haben können" u.a. genannt: Reibflächenpressung, Lamellentemperatur, Reibgeschwindigkeit. Nach Federn läßt sich die Leistungsgrenze" in Form der je Schaltzyklus in Wärme umsetzbare Energie" bzw. "in Form des zeitlich gemittelten Wärmestromes" angeben.

Nach derselben Literaturstelle gelten für Lamellenkupplungen der Reibpaarung Stahl/Sinterbronze als maximal zulässige spezifische Flächenpressung p = 4,2 MPa (S. 704), wobei entsprechende Untersuchungen zur Grenzbelastbarkeit bei maximal p = 1,6 MPa durchgeführt wurden (S. 705). Verschleißversuche wurden dort bei einer maximalen Reibarbeit pro Flächeneinheit von 1,66 bzw. 2,16 J/mm2 durchgeführt.

Die vorausgegangenen Ergebnisse werden bestätigt durch die Veröffentlichung "Verschleißverhalten von Reibpaarungen in Lamellenkupplungen", R. Mehmer; "Maschinentechnik" 31, 12 (1982), S. 551 ff.

Für die Reibpaarung Sinterbronze/Stahl wurden in den dort beschriebenen Verschleiß-Versuchen "praxisnahe Bedingungen", u. a. eine Reibflächenpressung von p < 2 MPA gewählt. In Bild 7 dieser Vorveröffentlichung ist der Verschleißwiderstand als Funktion der spezifischen Reibarbeit dargestellt. Bei spezifischen Reibarbeiten über 1,6 J/mm² nimmt der bis dahin ansteigende Verschleißwiderstand wieder rasch ab, so daß die zuverlässige Belastbarkeit in diesem Bereich ihre Grenze hat.

Der Erfindung liegt daher die Aufgabe zugrunde, Synchronisiervorrichtung der eingangs genannten Art so auszugestalten und ein Verfahren zu deren Herstellung aufzuzeigen, daß diese preisgünstig herstellbar sind, hohe Ausnützung der geometrischen Reibfläche zulassen, eine vergleichsweise lange Lebensdauer, große kurzzeitige Überlastbarkeit und dabei nur geringe, vorzeitige Ausfallhäufigkeit aufweisen und dennoch die weiter vorne geschilderten Nachteile bekannter Ausführungen nicht, oder nur in wesentlich geringerem Ausmaß aufweisen.

Diese Aufgabe wird erfindungsgemäß gelöst, daß der Reibkörper aus einem Trägerblech mit auf diesem aufgestreuten, aufgesinterten und durch ein- oder mehrmaliges Pressen verdichteten Streusinter-Reibbelag gebildet ist.

Die Verwendbarkeit derartiger Streusinter-Reibbeläge für die Reibflächenbelegung von Synchronisierringen war aus mehreren Gründen nicht naheliegend. Sie war es nicht aus Sicht der weiter vorne geschilderten, üblicherweise andersartigen Belastungen von Lamellenkupplungen mit Streusinter-Reibbelag.

Angesichts der zuvor genannten, praxisorientierten Belastungswerte ist weiterhin verständlich, daß im Anwendungsbereich Synchronisierringe für die Ausbildung der Reibflächen in bekannten Synchronisierringen Maßtoleranzen gefordert sind, welche nach ISO-Standard der Genauigkeitsklasse 5 entsprechen und damit unmittelbar an die engsten Toleranzen für Lehren angrenzen (z. B. Rundlaufabweichungen im Bereich von 2/100 mm). Aus diesem Grund werden beispielsweise, wie vorne beschrieben, selbst Mo-Aufspritzschichten nach der Auftragung auf Maß abgeschliffen. Der Grund fur diese Forderung ist naheliegenderweise der, die effektiv wirksame Reibfläche möglichst nahe an den Wert der geometrischen Reibfläche heranzubringen.

Es war daher nicht weniger überraschend und nicht vorhersehbar, daß Synchronisierringe gemäß vorliegender Erfindung, bei denen die bisher geforderten Maßtoleranzen prinzipiell nicht annähernd erreichbar sind, so vorzügliche Synchronisier-Eigenschaften aufweisen.

Es war weiterhin nicht vorhersehbar, daß sich angesichts der grundsätzlich bestehenden Haftungsschwierigkeiten eines Sinterbelages vom Material A auf einem Trägerkörper vom Material B derartige ebene Reibkörper mit Streusinter-Reibbelag zu nicht ebenen und/oder nicht geometrisch abwickelbaren Reibkörpern umarbeiten lassen, ohne daß der Reibbelag seine Reibungs- und Verschleißeigenschaften einbüßt und ohne daß der auf das Trägerblech aufgesinterte Streusinter-Reibbelag während der Herstellung der Reibkupplung oder -bremse, vor allem aber unter den extremen Einsatzbedingungen abplatzt. Bei den bisher bekannten Anwendungen sind die Eigenschaften derartiger Reibkörper stets nur unter den Gegebenheiten und Erfordernissen für diese Anwendungen gesehen worden. Erst die Verwendung der an sich bekannten Reibkörper in nicht ebener Form gemäß Erfindung brachte hinreichend zuverlässigen Aufschluß über deren Eigenschaften und Vorteile gegenüber dem bekannten Stand der Technik hinsichtlich Reibungszahl, Lebensdauer, große tatsächlich wirksame Reibfläche. Fähigkeit zur Ölverdrängung und Herstellkosten. Die weiter unten angeführten Versuchsergebnisse belegen die genannten Vorteile.

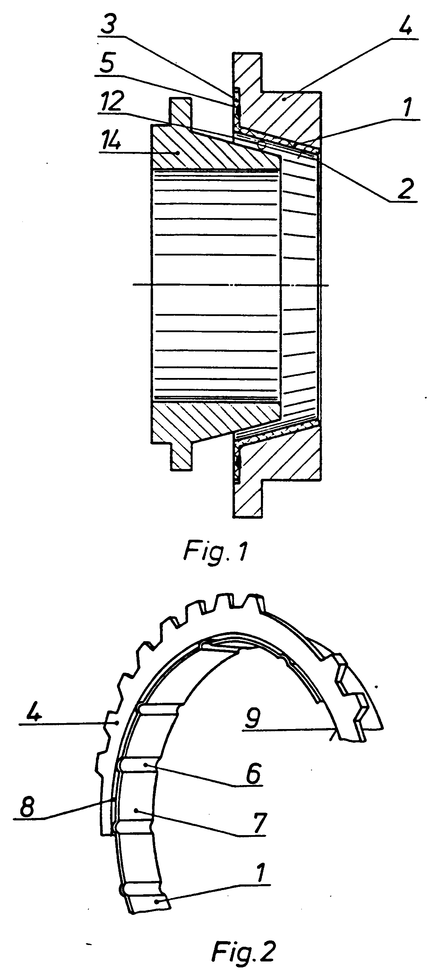

Nach einer bevorzugten Ausführung besitzt der Reibkörper einen nicht als Reibfläche verwendeten Bund, wobei der Reibkörper im Bereich des Bundes auf einen Basiskörper aufgelötet oder aufgeschweißt ist (siehe Figur 1). Diese Ausgestaltung ermöglicht eine technisch besonders einfache Schweißverbindung zwischen Basiskörper und Reibkörper mittels Anbringen einer geschlossenen Schweißnaht im Bereich des ringförmigen Bundes.

Bei Verwendung von separat gefertigten Reibkörpern mit Streusinter-Reibbelägen besteht die Möglichkeit, Basiskörper und Reibkörper mittels des Punkt- oder Rollnahtschweißens durch den Belag hindurch stoffschlüssig zu verbinden.

Als Trägerblech für den Streusinter-Reibbelag wird vorzugsweise ein tiefziehfähiges Stahlblech verwendet. Der nur als ebene Lamelle fertigbare Reibkörper wird durch Tiefziehen in die für die Reibfläche gewünschte Form gebracht.

Die Reibfläche des Reibkörpers besitzt eine Oberflächenstruktur, welche für eine Vielzahl von Anwendungen jede zusätzliche Ausbildung von Drainagenuten zur Ölverdrängung überflüssig macht; das gilt insbesondere im Falle der Verwendung von Schmierölen mit einer Viskosität bis zu 2500 mm²/sec., d. h. für übliche Getriebeöle ab einer Temperatur von ca. -10°C. Diese vorteilhafte Eigenschaft bleibt selbst nach dem Umformen des ursprünglich eben ausgebildeten Streusinter-Reibbelages mittels Tiefziehen in die gewünschte, nicht ebene Form erhalten.

Es hat sich ausreichend erwiesen, den Reibkörper nur in Teilflächen auf dem Basiskörper form-, reib- und/oder stoffschlüssig aufzubringen, die Reibfläche des Streusinter-Reibkörpers also nur näherungsweise mit den Sollmaßen, d.h. den Istmaßen des Basiskörpers bzw. der Reib-Gegenfläche, in Übereinstimmung zu bringen. Bei der Belastung der Reibkupplung wird nämlich der Reibkörper infolge seiner Elastizität unter dem Anpressdruck von der Gegen-Reibfläche gegen den Basiskörper gepresst.

Diese Ausgestaltung erlaubt größere Fertigungstoleranzen und damit eine kostengünstige Bauform. Im Vergleich mit Ausführungen unter Einhaltung der üblicherweise angewendeten engen Toleranzen gewährleistet sie dennoch ein vergleichsweise gutes Verhältnis von geometrischer und tatsächlich wirksamer Reibfläche.

Die vorgenannten Eigenschaften der Erfindung erlauben die Verwendung entsprechender Synchronisierringe für handbediente Schaltanordnungen ohne Kraftverstärker. Das gilt überraschenderweise sogar für eine Ausführung, nach der keine zusätzlichen Drainagenuten zur Ölverdrängung im Reibkörper angebracht sind.

In weiteren Unteransprüchen sind vorteilhafte Weiterbildungen des Erfindungsgedankens angegeben.

Die Erfindung wird anhand der nachstehenden Zeichnungen näher erläutert. Es zeigen:
Figur 1 eine Synchronisiervorrichtung gemäß Erfindung in einer bevorzugten Ausgestaltung im Schnitt,
Figur 2 die Schrägansicht eines Synchronringes in einer anderen vorteilhaften Ausgestaltung der Erfindung,
Figuren 3 - 5 die Reibungszahl von Reibkupplungen in Abhängigkeit von der Umdrehungszahl bzw. Gleitgeschwindigkeit bei Verwendung dreier verschiedener Getriebeöle und zwar jeweils eine Reibkupplung gemäß Erfindung im Vergleich mit einer herkömmlichen, serienmäßig gefertigten Reibkupplung aus Messing.

Der Schnitt in Figur 1 zeigt, vereinfacht dargestellt, einen Synchronisierring -4- und einen dazugehörigen Gleichlaufring -14-. Die kegelförmige Reibfläche des Synchronisierringes -2- und die Reibfläche -12- des Gleichlaufringes weisen einen Abstand zueinander auf. Sie befinden sich nicht in Kraftschluß. Der Reibkörper -1- ist in Gestalt des Streusinter-Reibbelages angebracht; er besitzt einen nicht als Reibfläche verwendeten Bund -3- und ist über eine Ringschweißnaht -5- mit dem Basiskörper stoffschlüssig verbunden.

Figur 2 zeigt einen Ausschnitt aus der Schrägansicht eines Synchronisierringes -4-. Auf der kegelförmigen Reibfläche -9- desselben ist der Reibkörper aufgebracht. Dieser Reibkörper ist vor dem Aufbringen derart vorgefalzt worden, daß er längs einzelner, streifenförmiger Flächenabschnitte -6- auf dem Basiskörper aufliegt und in diesem Bereich mit dem Basiskörper stoffschlüssig verbunden ist, beispielsweise über Punktschweißungen. Aufgrund der Falzung liegt der Reibkörper mit seiner übrigen Fläche -7- nicht auf dem Basiskörper auf, sondern weist einen etwa gleichbleibend breiten, spaltförmigen Abstand -8- zum Basiskörper auf.

Der nicht auf dem Basiskörper aufliegende Flächenteil des Reibkörpers kann sich aufgrund seiner Elastizität voll die entsprechende Reibfläche des Gleichlaufringes anlegen. Damit haben die Maßungenauigkeiten der kegelförmigen Reibflächen keinen Einfluß auf das Tragbild, und es können Formänderungen der Reibfläche infolge Druck und Temperaturbelastung ohne Auswirkung auf die tatsächlich wirksame Reibfläche ausgeglichen werden. Des weiteren wird durch diese Ausgestaltung die Gefahr des Auftretens von Reibschwingungen verringert.

Nachfolgend wird an einigen Versuchsreihen die technische Überlegenheit der erfindungsgemäßen Reibkupplungen gegenüber herkömmlichen Ausführungen gezeigt.

In einem ersten Versuch wurde in einer praxisnahen Versuchsanordnung die Reibungszahl µ in Abhängigkeit von der Drehzahl n, einmal für eine mit einem Reibkörper gemäß vorliegender Erfindung belegte Kegelfläche, zum anderen für einen Reibkörper mit gleich großer geometrischer Reibfläche aus Messing (CuZn 40 Al2) ermittelt. Dabei bedeutet µ einen Mittelwert der Reibungszahl aus je vier Versuchen mit den Anpreßkräften 50, 100, 200 und 400 N. Die Drehzahl n ist in Umdrehungen je Minute gemessen. Dabei entsprechen 1000 U/min in etwa einer Gleitgeschwindigkeit von 2,9 m/s.

Die getesteten Kegel hatten einen mittleren Durchmesser dₘ = 55 mm. Die Breite der Kegelfläche betrug 10 mm. Während der Reibkörper gemäß Erfindung keine Nuten zur Ölverdrängung aufwies, besaß der Messingring (serienmäßig hergestellter Synchronisierring) axiale Nuten und ein Spitzgewinde zur Ölverdrängung.

Für die Versuche stand als Gegenreibfläche ein Reibkegel aus 16MnCr5E-Stahl mit einer Oberflächenrauhigkeit Rₐ/R_{z} = 0,15/1,4 µm zur Verfügung.

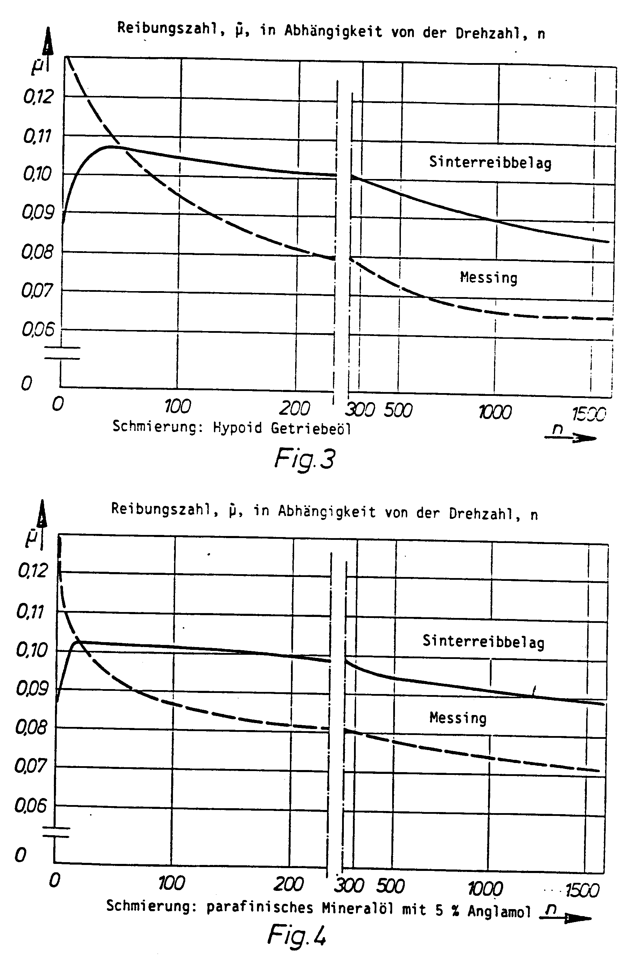

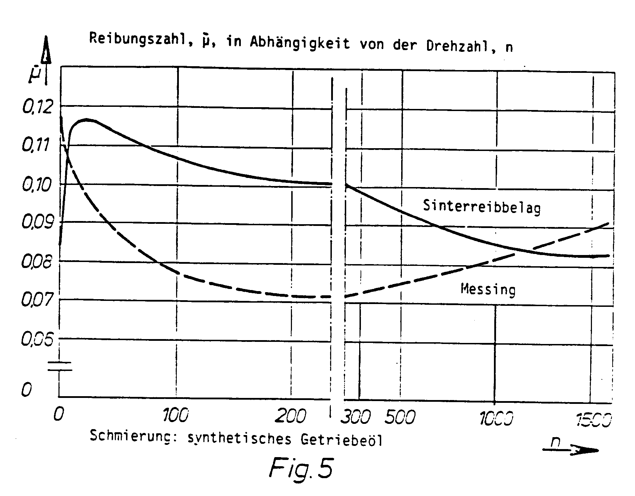

Die Ergebnisse sind in den Figuren 3 - 5 dargestellt, wobei sich die drei Versuchsreihen durch die Verwendung unterschiedlicher Getriebeöle auszeichnen. Figur 3 stellt die Meßwerte unter Verwendung eines Hypoid-Getriebeöls dar, in Figur 4 ist ein parafinisches Mineralöl mit 5 % Anglamol und in Figur 5 ein synthetisches Getriebeöl verwendet worden. Die in den Figuren eingezeichneten Meßwerte sind bei jeweils konstanter Drehzahl während 1 - 2 Sekunden-Belastung gemessen worden.

In allen drei Versuchsreihen (Figur 3 - 5) liegt die Gleitreibung, zumindest im Bereich der technisch interessanten Drehzahlen, für einen Reibkörper gemäß vorliegender Erfindung deutlich höher als für das Beispiel einer bekannten Ausführung. Gemäß vorliegender Erfindung kann somit in einem bisher nicht vorhersehbaren Ausmaß eines bestimmtes Reibmomentes mit einer wesentlich kleineren Anpreßkraft erzeugt werden als bei bekannten Ausführungen. In der Praxis bedeutet dies, daß eine Reibkupplung, beispielsweise ein Synchronisierring, kürzere Synchronisierdauer und damit schnelleren Gangwechsel bei gleichzeitig kleinerer Reibarbeit ermöglicht. Ein zweiter wesentlicher Vorteil der erfindungsgemäßen Lösung gegenüber bekannten Ausführungen ist die deutlich geringere Haftreibung der ersteren, was einen verschleißmindernden, sowie den Schaltkomfort erhöhenden Übergang von Relativbewegung auf Gleichlauf der Bauteile einer Reibkupplung bedeutet und damit ein sehr weiches Durchschalten erlaubt.

Zur weiteren Demonstration der Überlegenheit eines Synchronisierringes gemäß vorliegender Erfindung gegenüber bekannten Ausführungen wurden verschiedene Synchronisierringe in einem Kupplungssimulator getestet, welcher praktisch die Bedingungen vorgibt, wie sie im Nutzfahrzeug vorliegen: das betrifft insbesondere die Schaltkraft, Schaltkraftanstieg, Reibarbeit, Reibleistung, Drehzahl und Schmierung.

Geprüft wurden Synchronisierringe (Durchmesser 108 mm) mit kegelförmiger Reibfläche von 10 mm Breite. Im Vergleich wurden getestet: ein Synchronisierring mit einem Reibkörper gemäß vorliegender Erfindung, ein Messingring sowie ein Synchronisierring aus Sinterstahl mit aufgespritztem und verdichtetem Molybdän-Reibbelag.

Man kann davon ausgehen, daß bei Nutzfahrzeugen im betriebswarmem Zustand die Nennreibarbeit am Synchronisierring bei 1,5 - 2 kJ liegt. Unter ungünstigen Bedingungen, wie kaltes Getriebe, Fehlschaltung oder nicht vollständig trennende Schaltkupplung kann die Reibarbeit jedoch ein Mehrfaches von diesem Wert erreichen. In einer großen Zahl von simulierten Kupplungsvorgängen wurde nunmehr ermittelt, daß ein Synchronisierring mit Streusinter-Reibbelag noch bei einer Reibarbeit von 7,5 kJ ein sich praktisch nicht änderndes Reibungs- und Verschleißverhalten zeigt. Demgegenüber zeigt ein Synchronisierring aus Messing bei Reibarbeiten von 4 kJ und darüber eine mit der Zahl der Kupplungsvorgänge rasch ansteigende Haft-Reibungszahl und damit eine sehr ungünstige Veränderung des Reibungs- und Verschleißverhaltens. Synchronisierringe aus Sinterstahl mit Mo-Belag neigen ab einer Reibarbeit von 5 kJ zu einem höchst unerwünschten, die Funktionserfüllung gefährdenden Fressen des Reibpaares.

Reibkörper mit Streusinter-Reibbelägen, auf Synchronisierringen aufgebracht, sind entsprechenden Ringen aus Messing bezüglich Dauerstandfestigkeit erheblich und Sinterstahlringen mit Mo-Belag geringfügig überlegen, sind aber vor allem letzteren im Herstellpreis deutlich überlegen.

Bei einer stationären Reibbeanspruchung mit 100 N Anpreßkraft und 500 U/min während einer Stunde Belastungsdauer zeigt der Messingring oben genannter Reibflächenabmessung in oben genannter praxisnaher Versuchsanordnung einen Materialverlust von 2 - 8 mg; der Sinterstahlring mit Mo-Belag einen Materialverlust von 1 - 4 mg, während der Materialverlust des zum Vergleich untersuchten Streusinter-Reibbelages nicht meßbar ist.

In allen Versuchsreihen bestand der Synchronisierring gemäß vorliegender Anmeldung aus einem Basiskörper, insbesondere aus Sinterstahl, auf den ein handelsüblicher Streusinter-Reibkörper der Type HS 43 t mittels Punktschweißung durch die Reibfläche hindurch aufgebracht war.

Das Reibmaterial des Reibbelages besteht insbesondere aus metallischen und nichtmetallischen anorganischen Werkstoffen.

In der Regel ist beim Erfindungsgegenstand nur eine der beiden Reibflächen eines Reibflächenpaares mit einem Streusinter-Reibbelag versehen und die Gegenreibfläche ist insbesondere in gehärtetem Stahl ausgeführt.

## Patentansprüche

1. Synchronisierring und/oder Synchronisier-Gegenkonus, für handbediente Schaltanordnungen in Kfz-Getrieben, mit nicht ebenen und/oder geometrisch nicht abwickelbaren, geschmierten Reibflächen, wobei für die Reibfläche ein im ebenen Zustand separat vorgefertigter Reibkörper (1) verwendet ist, welcher auf einen Basiskörper aus Metall material-, form- oder kraftschlüssig unter Umformung aufgebracht ist,
dadurch gekennzeichnet,
daß der Reibkörper (1) aus einem Trägerblech mit auf diesem aufgestreuten, anschließend aufgesinterten und dann durch ein- oder mehrmaliges Pressen verdichteten Streusinter-Reibbelag gebildet ist.

2. Synchronisierring und/oder Synchronisier-Gegenkonus nach Anspruch 1, dadurch gekennzeichnet, daß der Reibkörper (1) ein- oder mehrteilig ist und auf den Basiskörper zumindest in Teilbereichen desselben form-, reib- und/oder stoffschlüssig aufgebracht ist.

3. Synchronisierring und/oder Synchronisier-Gegenkonus nach Anspruch 2, dadurch gekennzeichnet, daß der Reibkörper (1) einen nicht als Reibfläche (2) verwendeten Bund (3) aufweist und im Bereich des Bundes auf dem Basiskörper aufgelötet oder aufgeschweißt ist.

4. Synchronisierring und/oder Synchronisier-Gegenkonus nach Anspruch 2 oder 3, dadurch gokennzeichnet, daß der Reibkörper im Bereich der Reibfläche durch den Reibkörper hindurch auf dem Basiskörper der Reibkupplung oder -bremse aufgeschweißt ist.

5. Synchronisierring und/oder Synchronisier-Gegenkonus nach einem der Ansprüche 2 - 4, dadurch gekennzeichnet, daß der Reibkörper (1) vorgefalzt ausgebildet ist und so auf dem Basiskörper aufgebracht ist.

6. Synchronisierring und/oder Synchronisier-Gegenkonus nach einem der Ansprüche 2 - 5, dadurch gekennzeichnet, daß der Basiskörper aus Sinterstahl ist.

7. Synchronisierring und/oder Synchronisier-Gegenkonus nach einem der Ansprüche 1 - 6, dadurch gekennzeichnet, daß das Trägerblech ein tiefziehfähiges Stahlblech ist.

8. Synchronisierring und/oder Synchronisier-Gegenkonus nach einem der Ansprüche 1 - 7, dadurch gekennzeichnet, daß die Reibfläche eine für die Ölverdrängung geeignete, gleichmäßig strukturierte Oberflächenrauhigkeit aufweist.

9. Verfahren zur Herstellung eines Synchronisierrings und/oder Synchronisiergegenkonus nach einem der Ansprüche 2 - 8, dadurch gekennzeichnet, daß der zumindest näherungsweise in die Form der Reibflächen gebrachte Reibkörper (1) mittels Walzen, einschließlich Prägewalzen, reib- und zumindest in Teilflächen formschlüssig auf den Basiskörper aufgebracht wird.

## Claims

1. Synchronizing ring and/or synchronizing cone for manually operated automotive gearboxes with lubricated friction surfaces which are not flat and/or which cannot be developed geometrically, a separately, in a plane condition pre-manufactured friction body (1) being employed for the friction surface, this friction body when shaped being applied to a metal base body in a manner such that it is secured by material-to-material bonding, by positive mechanical engagement, or by non-positive frictional engagement, characterized in that the friction body (1) is shaped from a backing plate with a friction coating which has been produced by sprinkling powder thereon, and then application sintering, and which friction body has then been compacted by means of a pressing treatment that may be repeated at least once.

2. Synchronizing ring and/or synchronizing cone according to Claim 1, characterized in that the friction body (1) consists of a single piece, or of a plurality of pieces, and is applied to the base body over at least part-areas thereof, in a manner such that it is secured by positive mechanical engagement, by frictional engagement, and/or by material-to-material bonding.

3. Synchronizing ring and/or synchronizing cone according to Claim 2, characterized in that the friction body (1) possesses a flange (3) that is not utilized as a friction surface (2), and the friction body (1) is soldered or welded to the base body in the flange region.

4. Synchronizing ring and/or synchronizing cone according to Claim 2 or 3, characterized in that the friction body is welded to the base body of the friction clutch, or brake, in the friction surface region, welding taking place through the friction body.

5. Synchronizing ring and/or synchronizing cone according to any one of Claims 2 to 4, characterized in that the friction body (1) is shaped by pre-crimping, and is applied to the base body in the crimped condition.

6. Synchronizing ring and/or synchronizing cone according to any one of Claims 2 to 5, characterized in that this clutch or brake is a synchronizing ring (4) with a sintered steel base body.

7. Synchronizing ring and/or synchronizing cone according to any one of Claims 1 to 6, characterized in that the backing plate is a deep-drawable steel plate.

8. Synchronizing ring and/or synchronizing cone according to any one of Claims 1 to 7, characterized in that the friction surface exhibits a uniformly textured surface roughness which promotes oil displacement.

9. Process for manufacturing a friction clutch or friction brake according to any one of Claims 2 to 8, characterized in that the friction body (1) is brought at least approximately to the shape of the friction surfaces by means of rolling, including roll embossing, and is then applied to the base body in a manner such that it is secured by frictional engagement and also, at least over part-areas, by positive mechanical engagement.

## Revendications

1. Anneau de synchronisation et anneau synchrone pour agencements de commande manoeuvrés manuellement de vèhicules automobiles avec surfaces de frottement lubrifiées non planes et/ou géométriquement non développables, un corps de friction (1) préfabriqué séparément en conditione plane étant utilisé pour la surface de frottement et étant appliqué, avec faconnage, sur un corps de base en matière métallique auquel il est lié par conjugaison de matière, de formes ou par force,
caractérisé
par le fait que le corps de friction (1) est formé par une tôle porteuse avec une garniture de friction rapportée-frittée obtenue par application de matière puis frittage et ensuite compactage par compression en une ou plusieurs fois.

2. Anneau de synchronisation et anneau synchrone selon la revendication 1, caractérisé par le fait que le corps de friction (1) est en une ou plusieurs parties et est rapporté sur le corps de base auquel il est lié, au moins dans des régions partielles de celui-ci, par conjugaison de formes, par liaison de frottement et/ou par liaison par matière.

3. Anneau de synchronisation et anneau synchrone selon la revendication 2, caractérisé par le fait que le corps de friction (1) présente un collet (3) non utilisé en tant que surface de frottement (2) et est lié par brasage ou soudage au corps de base, dans la région de ce collet.

4. Anneau de synchronisation et anneau synchrone selon la revendication 2 ou 3, caractérisé par le fait que le corps de friction est lié au corps de base de l'embrayage à friction ou du frein, dans la région de la surface de frottement, par soudage au travers du corps de friction.

5. Anneau de synchronisation et anneau synchrone selon l'une des revendications 2 à 4, caractérisé par le fait que le corps de friction (1) est doté de plis de formage préalables et est ainsi rapporté sur le corps de base.

6. Anneau de synchronisation et anneau synchrone selon l'une des revendications 2 à 5, caractérisé par le fait qu'il est un anneau de synchronisation (4) avec un corps de base en acier fritté.

7. Anneau de synchronisation et anneau synchrone selon l'une des revendications 1 à 6, caractérisé par le fait que la tôle-support est une tôle d'acier apte à l'emboutissage.

8. Anneau de synchronisation et anneau synchrone selon l'une des revendications 1 à 7, caractérisé par le fait que la surface de frottement présente une rugosité de surface à structure régulière, convenant pour le déplacement d'huile.

9. Procédé de réalisation d'un embrayage à anneau de synchronisation et anneau synchrone selon l'une des revendications 2 à 8, caractérisé par le fait que le corps de friction (1) mis, au moins approximativement, à la forme des surfaces de frottement, est rapporté sur le corps de base auquel il est lié par frottement et, au noins dans des surfaces partielles, par conjugaison de formes, par laminage, y compris par moletage.
